# EUROPEAN PATENT APPLICATION

(11) **EP 1 093 837 A1**
(43) Date of publication of application: **25.04.2001**
(21) Application number: 99926842.8
(22) Date of filing: 30.06.1999
(51) Int. Cl.: B01D 19/00

(54) **MATERIAL AND FUEL DELIVERY DEVICE**

(30) Priority: 02.07.1998 JP 18781098
(71) Applicant: NGK INSULATORS, LTD., Nagoya-City, Aichi Prefecture 467-8530 (JP)
(72) Inventor: TAKEUCHI, Yukihisa, Nishikamo-gun, Aichi 470-0204 (JP); TAKAHASHI, Nobuo, Owariasahi-city, Aichi 467-0011 (JP)
(74) Representative: Paget, Hugh Charles Edward
(86) International application number: PCT/JP99/03509
(87) International publication number: WO 00/01460

(57) **Abstract**

A device for discharging raw material · fuel includes: a structure for discharging liquid having at least a pressurizing means (4) for discharging liquid, a pressure application room (1), a flow path (3) communicating with the pressure application room (1), and an air bubble trap cell (2) communicating with the pressure application room (1) via the flow path (3). According to this device, a trapped air bubble can be securely released.

## Description

### Technical Field

The present invention relates to a device for discharging raw material · fuel to be used to various machines operating by discharging liquid raw material or fuel or various machines for treating the liquid by discharging liquid raw material or fuel.

### Background Art

A liquid discharge device is disclosed in, for example, JP-A-6-40030. However, in some modes for use of a liquid discharge device, air bubbles formed by mechanical vibrations which occur depending on use environment penetrate into a pressure application room (1) of a liquid discharge device, and the penetrating air bubbles transform depending on pressure and absorb a part of or all the applied pressure even if the pressure application room (1) is pressurized, thereby it is often caused that aimed discharging of liquid cannot be performed as intended. Thus, there was a problem that a desired effect was not shown.

The present invention aims to provide a device for discharging raw material · fuel comprising the structure that can securely eject the air bubbles which penetrated into the liquid discharge device so as not to cause defectiveness to discharge or inability to discharge due to such penetrated air bubbles.

### Disclosure of Invention

The present inventors have studied in various ways in view of the present situations as the above and as a result found that not only absorption of pressurized pressure by penetrated air bubbles can be made zero substantially by providing an air bubble trap cell for trapping air bubbles generated by mechanical vibrations or the like via a flow path (3) communicating with a pressure application room, but also the trapped air bubbles can be ejected outside the cell by providing an element for making a pressure p₁ in the air bubble trap cell (2) upon discharge of liquid higher than external atmospheric pressure p₀ outside the device, and completed the present invention.

According to the present invention, there is provided a device for discharging raw material · fuel of the present invention comprising: a structure for discharging liquid having at least a pressurizing means (4) for discharging liquid, a pressure application room (1) which is a temporary storage means for liquid to be discharged, a flow path (3) communicating with the pressure application room (1), and an air bubble trap cell (2) communicating with the pressure application room (1) via the flow path (3).

### Brief Description of Drawings

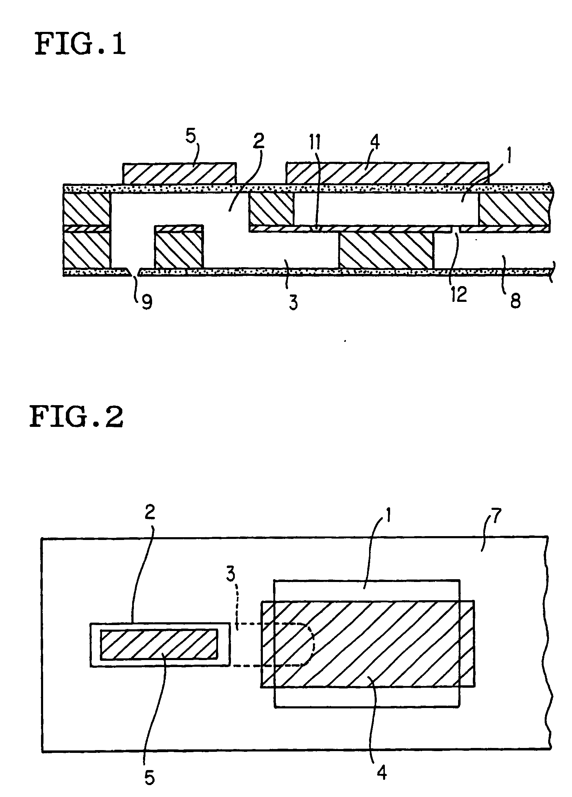

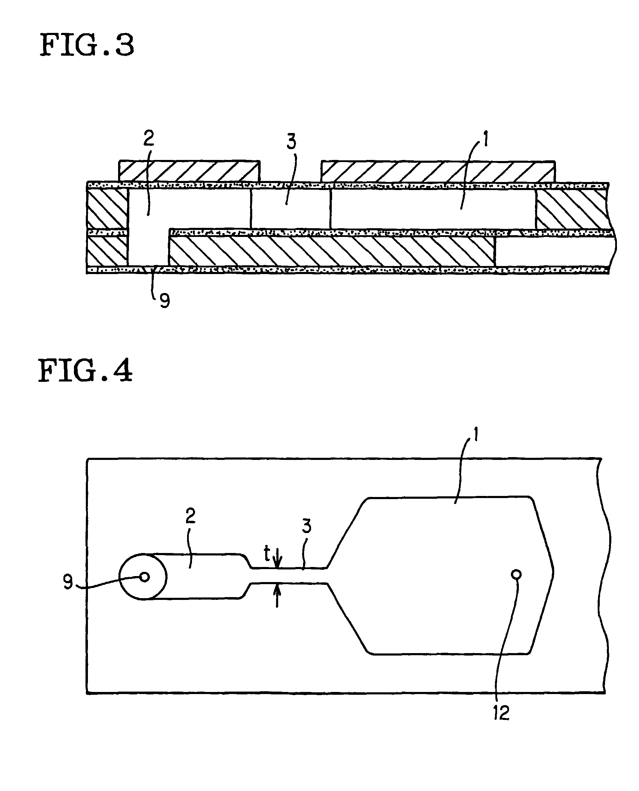

Fig. 1 is a side elevation of an embodiment of a device for discharging raw materials · fuel (hereinbelow sometimes referred to as a liquid discharge device) of the present invention. Fig. 2 is a bird's-eye view schematically showing locational relation and size of piezoelectric/electrostrictive membranous elements (4) and (5), a pressure application room (1), a flow path (3) and an air bubble trap cell (2) in an embodiment of a liquid discharge device of the present invention. Fig. 3 shows a sectional side elevation of another embodiment according to a liquid discharge device of the present invention. Fig. 4 is a bird's-eye view schematically showing locational relation and size of a pressure application room (1), a flow path (3) and an air bubble trap cell (2) in another embodiment of a liquid discharge device of the present invention shown in Fig. 3.

### Best Mode for Carrying Out the Invention

The present invention is hereinbelow described in detail on the basis of drawings.

Fig. 1 is a side elevation of a mode of a device for discharging raw material · fuel (a liquid discharge device) of the present invention. A device for discharging raw material · fuel of the present invention comprises: a structure for discharging liquid having at least a pressurizing means (4) for discharging liquid, a pressure application room (1) which is a temporary storage means for liquid to be discharged, a flow path (3) communicating with the pressure application room (1), and an air bubble trap cell (2) communicating with the pressure application room (1) via the flow path (3).

From several to hundreds units of liquid raw material / fuel discharge devices each, as one unit, having the above structure for discharging liquid having at least a pressurizing means for discharging liquid, a pressure application room (1) which is a temporary storage means for liquid to be discharged, a flow path (3) communicating with the pressure application room (1), and an air bubble trap cell (2) communicating with the pressure application room (1) via the flow path (3) may constitute a raw material / fuel discharge device depending on a mode of use.

The above structure is constituted by a structure in which generally two structures are accumulated in two levels in view of compression of a device. The pressure application room (1) and the air bubble trap cell (2) are located in the first layer via a partition wall, and the flow path (3) communicating with the pressure application room is located in the second layer that is located under the first layer. An end of the flow path (3) is located under the pressure application room, and the other end is located under the pressure application room (1) and the air bubble trap cell (2). Between the cells are provided minute holes (11) and (12) for preventing countercurrent to communicate to transmit liquid to 1 direction, respectively. Liquid is transmitted through the minute holes for preventing countercurrent.

As a pressurizing means to discharge liquid, a piezoelectric/electrostrictive membranous element (4) is adopted usually. A piezoelectric/electrostrictive membranous element is a well-known member for a person of ordinary skill in the art. A method for installation of the piezoelectric/electrostrictive membranous element onto a structure for discharging liquid may be in accordance with a well-known method.

In a liquid discharge device of the present invention, it is preferable that a piezoelectric/electrostrictive membranous element (5) is disposed on the air bubble trap cell (2) so that pressure can be applied to the air bubble trap cell (2) independently from the pressure application room (1) in order to promote discharge of air bubbles by pressure applied to the pressure application room (1). By adopting such a constitution, the air bubbles trapped by the cell (2) are pushed outside surely, and absorption of pressure for pressurization by the air bubbles can be avoided.

In a liquid discharge device of the present invention, a structure for discharging liquid formed as a multilayered structure can be produced by unitarily firing the compact obtained by employing ceramic materials into a predetermined shape in accordance with a method disclosed in Paragraphs 0010 ― 0013 of Japanese Patent Application No. 9-335210.

The liquid discharge device is produced by unitarily firing the structure which can be obtained by stacking up a plate formed by a green sheet which is a blocking plate to be a lid of the liquid discharge device; a spacer plate formed by a green sheet having window portions each serves as a pressure application room or an air bubble trap cell on predetermined points, respectively; a plate formed by a green sheet for definition and having two minute holes for preventing countercurrents; a spacer plate formed by a green sheet having window portions each serves as a liquid distribution tank for discharge or a flow path; and a nozzle plate which is a nozzle portion formed by a thin flat board-shaped green sheet.

The pressure application room (1) communicates with a flow path (3) via minute hole for preventing countercurrent -1 (11) and is adjacent to the flow path (3) in order to supplement the liquid to be discharged as desired and with a liquid distribution tank for discharge (8) provided via a partition wall via minute hole for preventing countercurrent -2 (12).

The pressure application room (1) has a shape such as cylindrical, elliptic cylindrical, rectangular, or the like. The capacity is determined according to a mode of use.

It is preferable that the air bubble trap cell (2) has an elliptic cylindrical shape, or the like, with which internal flow speed is easily raised at a time of discharging liquid. It is preferable that a capacity of the air bubble trap cell (2) is smaller than that of the pressure application room (1), and it is 1 : 2 or more, and preferably, 1 : 4 or more.

The reason to make a capacity of the air bubble trap cell (2) smaller than a capacity of the pressure application room (1) is that even if pressure is applied with a relatively weak pressure sufficient to make a pressure application room (1) discharge liquid, the flow speed in the air bubble trap cell (2) can be made sufficient for release of the trapped air bubble. Incidentally, the trapped air bubble can be prevented from passing through a flow path (3) and entering into the pressure application room (1) by making pressure p₁ in the air bubble trap cell (2) smaller than pressure p₂ of the pressure application room.

It is necessary to keep pressure p₁ in the air bubble trap cell (2) higher than atmospheric pressure p₀ outside the device to effectively release the effectively trapped air bubble outside the device. For that purpose, the volume ratio of the pressure application room (1) to the air bubble trap cell (2) is made at least 1 : 4 or more so that the larger pressurization force is easily obtained by enlarging the pressure application room (1), or a piezoelectric/electrostrictive membranous element (5) is provided over the air bubble trap cell.

Incidentally, to remove the air bubbles more securely, pressure conveyed by a pressure application room and pressure application by the operation of the piezoelectric/electrostrictive membranous element (5) provided over the air bubble trap cell (2) are made to work together by operating a piezoelectric/electrostrictive membranous element (4) provided in the upper part of a pressure application room (1) with time difference ranging from several micro-seconds to several 1.0 micro-seconds from the piezoelectric/electrostrictive membranous element (5) provided over the air bubble trap cell (2).

The time difference operation of both piezoelectric/electrostrictive membranous elements (4) and (5) can be conducted by a combination of CPU and a relay circuit (not shown), delay circuit (not shown), or the like.

The flow path (3) is provided so that the almost central portion of the flow path (3) is located under the partition wall provided between the air bubble trap cell (2) and the pressure application rooms (1), one end of the flow path (3) is located under the pressure application room (1), and the other end is located under an air bubble trap cell (2). Though there is no limitation in particular about a shape of a flow path (3), it is preferable to make the shape small in the sectional area and slender so that flow speed in discharging liquid is easily raised, and at the same time it is preferable to make the flow path (3) have capacity as small as possible in order to be able to discharge the air bubble more easily even if the air bubble enter into the flow path.

A capacity of the flow path (3) is a quarter or less of a capacity of the pressure application room (1) and the same as that of the air bubble trap cell (2) or less. Incidentally, the reason why the flow path (3) is provided under both of the other two cells without setting it in parallel to the other two cells in the same way as the two cells is that the whole device is made compact. Therefore, it is gone without saying that the two cells and the flow path may be provided in parallel depending on a mode of use.

Fig. 2 is a bird's-eye view to schematically show locational relation and size of the piezoelectric/electrostrictive membranous elements (4) and (5), the pressure application room (1), the flow path (3), and the air bubble trap cell (2) in one embodiment of a liquid discharge device of the present invention. In Fig. 2, (1) denotes a pressure application room, (2) denotes an air bubble trap cell, (3) denotes a flow path arranged in the layer which is located under (1) and (2), (4) denotes a piezoelectric/electrostrictive membranous element disposed over the pressure application room, and (5) denotes a piezoelectric/electrostrictive membranous element disposed over the air bubble trap cell (2).

It is preferable determining shapes, sizes, and the like, of a liquid discharge nozzle (9), minute hole for preventing countercurrent -1 (11) and minute hole for preventing countercurrent -2 (12) located between and cells (3) and (1) and cells (1) and (8), respectively, so that the relation of p₀<p₁<p₂ can be easily kept between pressure in each cell so that a trapped air bubble can be easily released. It is preferable that the minute hole for preventing countercurrent -1 (11) between the pressure application room (1) and the flow path (3) is formed so that the diameter (the longitudinal section) becomes little narrower toward the flow path (3).

It is preferable that each of the minute hole for preventing countercurrent -1 (11) and the minute hole for preventing countercurrent -2 (12) has a shape of a circle. In addition, a plurality of the minute holes may be provided per pressure application room, respectively.

As another embodiment of a liquid discharge device of the present invention, there is provided the one with a pressure application room (1), an air bubble trap cell (2) and a flow path (3) being disposed in parallel as shown in Fig. 3. This Fig. 3 is a bird's-eye view schematically showing shapes and locational relation among the pressure application room (1), the flow path (3) and the air bubble trap cell (2) in another embodiment of a liquid discharge device of the present invention.

An operation example of a liquid discharge device of the present invention is hereinbelow described while referring to Fig. 1 that is a sectional side elevation of a mode of a liquid discharge device of the present invention.

In a liquid discharge device shown in Fig. 1, an air bubble was took in the cell by lowering internal pressure of the air bubble trap cell (2) than the atmospheric pressure, and a piezoelectric/electrostrictive membranous element (4) of the pressure application room (1) was operated in the state, and predetermined quantity of liquid in a pressure application room (1) was pushed out of the air bubble trap cell (2) into water via the flow path (3). As a result, discharging of liquid and release of an air bubble were recognized.

### Industrial Applicability

According to a liquid discharge device of the present invention, a trapped air bubble that can be released securely.

Incidentally, a device of the present invention is useful as a discharge device upon combustion or drying processing of fuel or various kinds of liquid where stable discharging of liquid is required. That is, it is preferably used as a liquid discharge device upon supplying liquid for raw material for reaction or drying solution including an aimed product upon medicine composition or powder production or as a device for discharging various liquid fuel of oil such as an oil fan heater.

## Claims

1. A device for discharging raw material · fuel comprising: a structure for discharging liquid having at least a pressurizing means (4) for discharging liquid, a pressure application room (1), a flow path (3) communicating with the pressure application room (1), and an air bubble trap cell (2) communicating with the pressure application room (1) via the flow path (3).

2. A device for discharging raw material · fuel comprising at least a plurality of liquid discharge devices according to claim 1.

3. A device for discharging raw material · fuel according to claim 1 or 2, wherein said structure has two layers, the pressure application room (1) and the air bubble trap cell (2) are located in the first layer via a partition wall, a flow path (3) communicated with the pressure application room (1) is located in the second layer located under the first layer, an end of the flow path (3) is located under the pressure application room (1) and the other end is located under the pressure application room (1) and the air bubble trap cell (2).

4. A device for discharging raw material · fuel according to any one of claims 1-3, wherein a ratio of a capacity of the air bubble trap cell (2) and a capacity of the pressure application room (1) is 1 : 2 or more.

5. A device for discharging raw material · fuel according to claim 3, wherein the ratio of a capacity of the air bubble trap cell (2) and a capacity of a pressure application room (1) is 1 : 4 or more.

6. A raw material / fuel discharge device according to any one of claims 1 - 4, wherein a piezoelectric/electrostrictive membranous element (5) is further arranged over the air bubble trap cell (2).
